# EUROPÄISCHE PATENTANMELDUNG

(11) **EP 1 496 087 A1**
(43) Veröffentlichungstag der Anmeldung: **12.01.2005**
(21) Anmeldenummer: 04102094.2
(22) Anmeldetag: 13.05.2004
(51) Int. Cl.: C09D 5/03

(54) **Thermisch härtbare Pulverlackzusammensetzungen und deren Verwendung**

(30) Priorität: 11.07.2003 DE 10331796
(71) Anmelder: Degussa AG, 40474 Düsseldorf (DE)
(72) Erfinder: Wenning, Andreas, Dr., 48301 Nottuln (DE); Schmidt, Friedrich Georg, Dr., 45721 Haltern am See (DE); Kühnle, Adolf, Dr., 45770 Marl (DE); Jost, Carsten, Dr., 45770 Marl (DE); Wouters, Marielle, Dr., 5591 MZ Heeze (NL); van Bracht, Henk, 5641 GM Eindhoven (NL)

(57) **Zusammenfassung**

Die Erfindung betrifft mit Wärme härtbare Pulverlackzusammensetzungen, deren vernetzte Filme eine verbesserte Hydrophobie aufweisen.

## Beschreibung

Die Erfindung betrifft mit Wärme härtbare Pulverlackzusammensetzungen, deren vemetzte Filme eine erhöhte Hydrophobie aufweisen.

Thermisch härtbare Pulverlacke finden zunehmend Einsatz zur Beschichtung verschiedenster Substrate. Einer der vielen Gründe dafür ist, neben ihren hervorragenden Filmeigenschaften, die Umweltverträglichkeit dieser Produkte, insbesondere gegenüber lösemittelhaltigen Lacken. Im Vergleich zu thermoplastischen pulverförmigen Zusammensetzungen sind thermisch härtende Pulverlacke generell härter und resistenter gegenüber Lösemitteln und Detergentien, besitzen eine bessere Adhäsion zu metallischen Substraten und erweichen nicht bei der Exposition erhöhter Temperaturen.

Mit Wärme härtbare Pulverlacke werden in zahlreichen Patentschriften beschrieben, z. B. EP 0 536 085, EP 0536085, US 4,076,917, EP 0 322 834, WO 0075212, WO 0157148, WO 0050384, WO 0055266, EP 0600546, EP 0742805, EP 0698053, US 6,069,221, DE 27 35 497, DE 30 30 572, DE 44 06 444, EP 0565924, US 4,939,213, EP 0624577, US 5,084,541, DE 2324696, DE 3026455, DE 3026456 oder DE 23 24 696.

Allen mit Wärme härtbaren Pulverlacken ist gemeinsam, dass deren Filme sehr gut verlaufen, haften und elastisch sind. Allerdings besitzen die Filme keine ausgeprägte hydrophobe Oberfläche, so dass etwa Wasser und/oder Schmutz nur unzureichend abgewiesen werden.

Aufgabe der vorliegenden Erfindung war es, mit Wärme härtbare Pulverlackzusammensetzungen zu fmden, deren Filme hydrophobe Oberflächeneigenschaften besitzen, ohne dass die sehr guten mechanischen Filmeigenschaften sich verschlechtern.

Überraschend konnte diese Aufgabe durch eine mit Wärme härtbare Pulverlackzusammensetzung gelöst werden, die eine Verbindung mit funktionalisierten polyedrischen oligomere Silizium-Sauerstoff-Clustereinheiten enthält.

Gegenstand der Erfindung sind thermisch härtbare Pulverlackzusammensetzungen enthaltend
I. ein Bindemittel bestehend aus
   a) mindestens einer Verbindung mit im statistischen Mittel mehr als einer funktionellen Gruppe und
   b) mindestens einer Verbindung mit im statistischen Mittel mehr als einer zu a) komplementären funktionellen Gruppe;
      und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d = 1-2; e, f, g = 0-3; h = 1-4; m+n+o+p ≥ 4; a+b = 1; c+d = 2; e+f = 3 und g+h = 4;
   **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind
   und
III. Hilfs- und Zusatzstoffe.

Ebenfalls Gegenstand der Erfmdung ist die Verwendung von Zusammensetzungen enthaltend
I. ein Bindemittel bestehend aus
   a) mindestens einer Verbindung mit im statistischen Mittel mehr als einer funktionellen Gruppe und
   b) mindestens einer Verbindung mit im statistischen Mittel mehr als einer zu a) komplementären funktionellen Gruppe
      und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d = 1-2; e, f, g = 0-3; h = 1-4; m+n+o+p ≥ 4; a+b = 1; c+d = 2; e+f = 3 und g+h = 4;
   **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind
   und
III. Hilfs- und Zusatzstoffe.
   zur Herstellung von thermisch härtbaren Pulverlackzusammensetzungen.

Weiterer Gegenstand der Erfindung ist ein Verfahren zur Herstellung von thermisch härtbaren Pulverlackzusammensetzungen enthaltend
I. ein Bindemittel bestehend aus
   a) mindestens einer Verbindung mit im statistischen Mittel mehr als einer funktionellen Gruppe und
   b) mindestens einer Verbindung mit im statistischen Mittel mehr als einer zu a) komplementären funktionellen Gruppe
      und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d = 1-2; e, f, g = 0-3; h = 1-4; m+n+o+p ≥ 4; a+b = 1; c+d = 2; e+f = 3 und g+h = 4;
   **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind
   und
III. Hilfs- und Zusatzstoffe
bei Einhaltung einer Temperaturobergrenze von 140 °C, bevorzugt von 120 °C und 130°C, in beheizbaren Knetern, insbesondere Extrudern.

Gegenstand der Erfmdung ist auch ein Verfahren zur Herstellung von Beschichtungen durch Verwendung von thermisch härtbaren Pulverlackzusammensetzungen
enthaltend
I. ein Bindemittel bestehend aus
   a) mindestens einer Verbindung mit im statistischen Mittel mehr als einer funktionellen Gruppe und
   b) mindestens einer Verbindung mit im statistischen Mittel mehr als einer zu a) komplementären funktionellen Gruppe
      und
II. mindestens einer Verbindung, die polyedrische oligomere Silizium-Sauerstoff-Clustereinheiten aufweist, gemäß der Formel

   [(RₐX_{b}SiO_{1,5})ₘ (R_{c}X_{d}SiO)ₙ (RₑX_{f}Si₂O_{2,5})ₒ (R_{g}XₕSi₂O₂)ₚ]

   mit a, b, c = 0-1; d = 1-2; e, f, g = 0-3; h = 1-4; m+n+o+p ≥ 4; a+b = 1; c+d = 2; e+f = 3 und g+h = 4;
   **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
   **X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
   wobei die Substituenten vom Typ **R** gleich oder unterschiedlich sind und die Substituenten vom Typ **X** gleich oder unterschiedlich sind
   und
III. Hilfs- und Zusatzstoffe.

Das Bindemittel I besteht aus mindestens einer Verbindung a), die durch die Reaktion mit mindestens einer Verbindung b) thermisch zu einem Pulverlack gehärtet wird

Die Komponente I a) kann eine niedermolekulare, oligomere oder polymere Verbindung sein, die im statistischen Mittel mehr als eine reaktive funktionelle Gruppe enthält. Die in der Komponente I a) vorhandenen reaktiven funktionellen Gruppen können gleich oder voneinander verschieden sein. Die Komponente I a) besitzt einen Schmelzbereich zwischen 50 und 140 °C. Sie kann amorph oder (semi)kristallin sein.

Beispielsweise handelt es sich bei der Komponente I a) um einen Vertreter aus der Klasse der Polyether, Polythioether, Polyacetale, Polyesteramide, Epoxidharze, Aminoplaste, Polyazomethine, Polyurethane, Polysulfonamide, Melaminderivate, Celluloseester, Celluloseether, Polyvinylester, Polyester, Acrylatharze. Die Komponenten können auch hyperverzweigt oder dendrimer sein.

Als funktionelle Gruppen kommen beispielsweise C-C-Doppelbindungen, OH-, SH-, COOH- oder Epoxid-Gruppen in Betracht.

Auch beliebige Gemische dieser Verbindungen sind möglich.

Bevorzugte Komponenten I a) sind Polyester, Polyacrylate oder Epoxidharze, die Hydroxyl-, Carboxyl- und/oder Epoxidgruppen tragen.

Die Komponente I b) kann eine niedermolekulare, oligomere oder polymere Verbindung sein, die im statistischen Mittel mehr als eine reaktive funktionelle Gruppe enthält, die mit den reaktiven Gruppen der Komponente I a) mit Hilfe von Wärme reagieren. Die in der Komponente I b) vorhandenen reaktiven funktionellen Gruppen können gleich oder voneinander verschieden sein. Die Komponente I b) besitzt einen Schmelzpunkt zwischen 50 und 140°C. Sie kann amorph oder (semi)kristallin sein.

Beispielsweise handelt es sich bei der Komponente I b) um Epoxide, β-Hydroxyalkylamide, Carbonsäuren, Carbonsäureanhydride, Isocyanate, Uretdione, Glycolurile, Tris(alkoxycarbonylamino)-1,3,5-Triazine.

Auch beliebige Gemische dieser Verbindungen sind möglich.

Bevorzugte Komponenten I b) sind Triglycidylisocyanurat, aromatische Glycidylester, epoxidierte Fettsäureester, Dicarbonsäuren wie Dodecandisäure, Polycarbonsäuren, Carbonsäureanhydride, blockierte Isocyanat-Addukte, Polyadditionsverbindungen mit Uretdiongruppen, Methoxymethylglycoluril, 2,4,6-Tris-(Methoxycarbonylamino)-1,3,5-triazin, 2,4,6-Tris-(Butoxycarbonylamino)-1,3,5-triazin, 2,4,6-Tris-(Ethylhexoxycarbonylamino)-1,3,5-triazin, 2-Phenylimidazolin oder Salze aus Pyromellitsäure mit 2-Phenylimidazolin.

Die Komponente I wird in zahlreichen Patentschriften beschrieben, beispielsweise in EP 536 085, US 4,076,917, EP 322 834, WO 00/75212, WO 01/57148, WO 00/50384, WO 00/55266, EP 600 546, EP 742 805, EP 698 053, US 6,069,221, DE 27 35 497, DE 30 30 572, DE 44 06 444, EP 565 924, US 4,939,213, EP 624 577, US 5,084,541, DE 23 24 696, DE 30 26 455, DE 30 26 456, DE 23 24 696.

### Beispielsweise handelt es sich um die Kombination folgender Verbindungen:

Polyester mit Carboxylendgruppen mit Triglycidylisocyanurat (z. B. Araldit® PT 810 der Vantico AG), Polyester mit Carboxylendgruppen mit einer Mischung aromatischer Glycidylester (z. B. Araldit® PT 910 oder Araldit® PT 912 der Vantico AG), Polyester mit Carboxylendgruppen mit einem β-Hydroxyalkyamid (z. B. VESTAGON® EP-HA 320 der Degussa AG, Primid® XL-552, Primid® QM 1260 oder Primid® SF 4510 der EMS-Primid, Prosid® H oder Prosid® S der SIR), Polyester mit Carboxylendgruppen mit einem aliphatischen Oxiran (z. B. Uranox® P 7200, Uranox® P 7300, Uranox® P 7400 oder Uranox® P 7455 der DSM Resins), Glycidylmethacrylatharz mit Dodecandisäure, Polyesterpolyol mit einem blockierten Isocyanataddukt (z. B. VESTAGON® B 1530, VESTAGON® B 1400 oder VESTAGON® B 1065 der Degussa AG), Polyesterpolyol mit einer Polyadditionsverbindung mit Uretdiongruppen (z. B. VESTAGON® BF 1540, VESTAGON® BF 1320 der Degussa AG), Polyesterpolyol mit Methoxymethylglycoluril (z. B. Powderlink® 1174 der Cytec Industries), Polyesterpolyol mit 2,4,6-Tris-(Methoxycarbonylamino)-1,3,5-triazin oder 2,4,6-Tris-(Butoxycarbonylamino)-1,3,5-triazin (z. B. von Cytec Industries), Epoxidharz mit 2,4,6-Tris-(Methoxycarbonylamino)-1,3,5-triazin oder 2,4,6-Tris-(Butoxycarbonylamino)-1,3,5-triazin (z. B. von Cytec Industries), Epoxidharz mit 2-Phenylimidazolin (z.B. VESTAGON B 31 der Degussa AG), Epoxidharz mit einem Polyester mit Carboxylendgruppen, Epoxidharz und ein Polyester mit Carboxylendgruppen mit einem organischen Salz (z.B. VESTAGON® B 55 oder VESTAGON® B 68 der Degussa AG).

Die Bindemittel können beliebig untereinander gemischt werden.

Die Verbindung II weist polyedrische oligomere Silizium-Sauerstoff-Clustereinheiten auf, gemäß der Formel

[(RₐX_{b}SiO_{1,5})ₘ (R_{c}X_{d}SiO)ₙ (RₑX_{f}Si₂O_{2,5})ₒ (R_{g}XₕSi₂O₂)ₚ]

mit a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

Vorzugsweise werden unter einem polyedrischen oligomeren Silizium-Sauerstoff-Cluster die beiden Verbindungsklassen der Silasesquioxane und der Sphärosilikate verstanden.

Silasesquioxane sind oligomere oder polymere Stoffe, deren vollständig kondensierte Vertreter die allgemeinen Formel (SiO_{3/2}R)ₙ besitzen, wobei n ≥ 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. **102** (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest steht und Y eine hydrolisierbare Gruppe, wie z.B. Clorid, Alkoxid oder Siloxid darstellt. Lichtenhan et al. beschreiben die basenkatalysierte Herstellung von oligomeren Silasesquioxanen (WO 01/10871). Silasesquioxane der Formel R₈Si₈O₁₂ (mit gleichen oder unterschiedlichen Kohlenwasserstoffresten R) können basenkatalysiert zu funktionalisierten, unvollständig kondensierten Silasesquioxanen, wie z.B. R₇Si₇O₉(OH)₃ oder auch R₈Si₈O₁₁(OH)₂ und R₈Si₈O₁₀(OH)₄ umgesetzt werden (Chem. Commun. (1999), 2309-10; Polym. Mater. Sci. Eng. **82** (2000), 301-2; WO 01/10871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Wenn es sich bei der polyedrischen oligomeren Silizium-Sauerstoff-Cluster aufweisenden Verbindung II um die Verbindungsklasse der Silasesquioxane handelt, besitzen sie folgende Formel

[(RₐX_{b}SiO_{1,5})ₘ (R_{c}X_{d}SiO)ₙ]

mit a, b, c = 0-1; d = 1-2; m+n ≥ 4; a+b = 1; c+d = 2.

Bevorzugt sind Verbindungen, die funktionalisiert sind und deren funktionalisierte polyedrische oligomere Silizium-Sauerstoff-Clustereinheit im Wesentlichen auf der Struktur 1 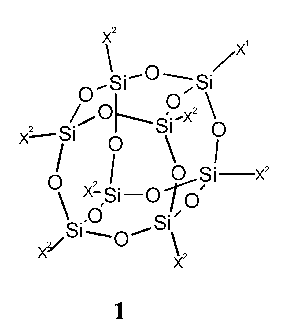 basiert,
mit **X**^{**1**} = Substituent vom Typ **X** oder vom Typ -**O-SiX**_{**3**}, **X**^{**2**} = Substituent vom Typ **X**, vom Typ -**O-SiX**_{**3**}, vom Typ **R**, vom Typ -**O-SiX**_{**2**}**R**, vom Typ -**O-SiXR**_{**2**} oder vom Typ **-O-SiR**_{**3**},
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**.

Bevorzugt sind auch Verbindungen, die im Wesentlichen auf der funktionalisierten oligomeren Silasesquioxaneinheit der Struktur 2, 3 oder 4 basieren, 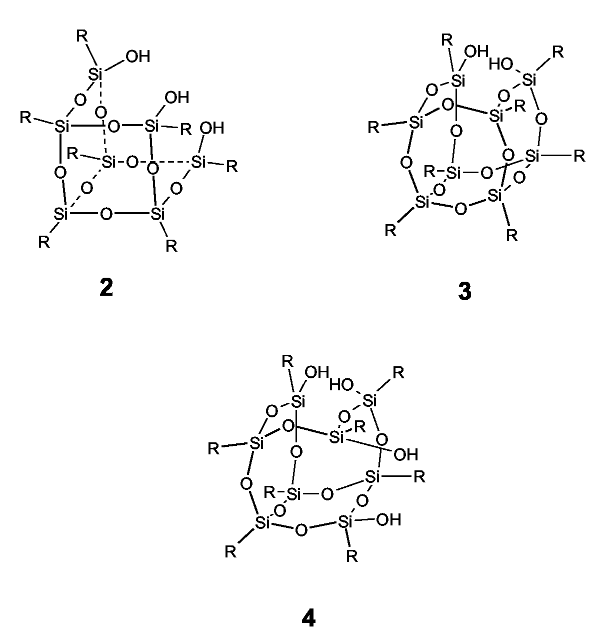 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte oligomere Silasesquioxaneinheiten, die über eine Polymereinheit oder eine Brückeneinheit angebunden sind, wobei die Silasesquioxaneinheit über mindestens eine Hydroxylgruppe funktionalisiert ist.

Die Substituenten vom Typ **R** der Silasesquioxaneinheiten können alle identisch sein, daraus ergibt sich eine sogenannte funktionalisierte homoleptische Struktur gemäß

[(RSiO_{1,5})ₘ (RXSiO)ₙ]

mit m + n = z und z ≥ 4, wobei z der Anzahl der Siliziumatome in der Gerüststruktur der polyedrischen oligomeren Silizium-Sauerstoff-Clustereinheit entspricht und **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**, wobei die Substituenten vom Typ **R** und vom Typ **X** gleich oder unterschiedlich sind, basiert.

In einer weiteren Ausführungsform des Vernetzers können mindesten zwei der Substituenten vom Typ **R** verschieden sein, man spricht dann von einer funktionalisierten heteroleptischen Struktur des Vernetzers gemäß

[(RSiO_{1,5})ₘ (R'XSiO)ₙ]

mit m + n = z und z ≥ 4, wobei z der Anzahl der Siliziumatome in der Gerüststruktur der polyedrischen oligomeren Silizium-Sauerstoff-Clustereinheit entspricht und **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R,** wobei die Substituenten vom Typ **R** und vom Typ **X** gleich oder unterschiedlich sind, basiert.

Ganz besonders bevorzugt sind funktionalisierte oligomere Silasesquioxane der Struktur 5 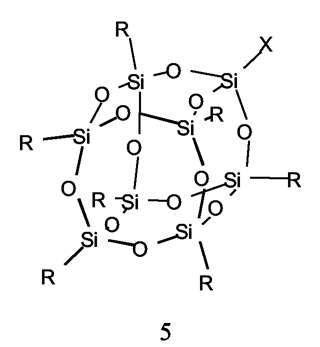 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

Ebenfalls besonders bevorzugt sind Verbindungen, deren polyedrische oligomere Silizium-Sauerstoff-Clustereinheiten nicht funktionalisierte oligomere Silasesquioxaneinheiten sind.

Oligomere Sphärosilikate sind ähnlich aufgebaut wie die oligomeren Silasesquioxane. Auch sie besitzen eine "käfigartige" Struktur. Im Unterschied zu den Silasesquioxanen, bedingt durch ihre Herstellungsmethode, sind die Siliziumatome an den Ecken eines Sphärosilikates mit einem weiteren Sauerstoffatom verbunden, welches wiederum weiter substituiert ist. Oligomere Sphärosilikate lassen sich durch Silylierung geeigneter Silikat-Vorstufen herstellen (D. Hoebbel, W. Wieker, Z. Anorg. Allg. Chem. **384** (1971), 43-52; P. A. Agaskar, Colloids Surf. **63** (1992), 131-8; P. G. Harrison, R. Kannengiesser, C. J. Hall, J. Main Group Met. Chem. **20** (1997), 137-141; R. Weidner, Zeller, B. Deubzer, V. Frey, Ger. Offen. (1990), DE 38 37 397). So kann beispielsweise das Sphärosilikat mit der Struktur 7 aus der Silikat-Vorstufe der Struktur 6 synthetisiert werden, welche ihrerseits über die Umsetzung von Si(OEt)₄ mit Cholinsilikat bzw. durch die Umsetzung von Abfallprodukten der Reisernte mit Tetramethylammoniumhydroxid zugänglich ist (R. M. Laine, I. Hasegawa, C. Brick, J. Kampf, Abstracts of Papers, 222nd ACS National Meeting, Chicago, IL, United States, August 26-30, 2001, MTLS-018).

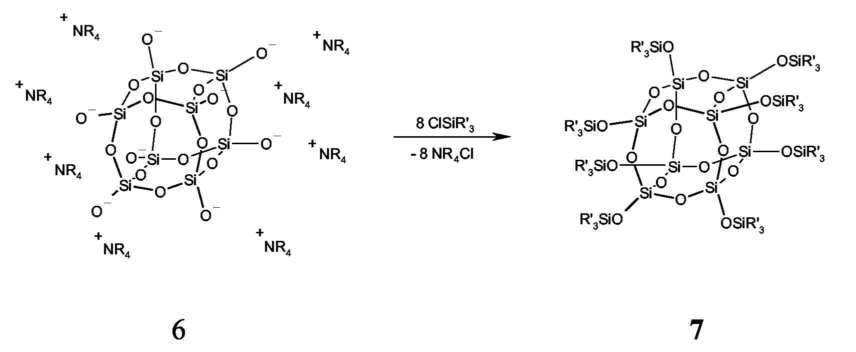

Wenn es sich bei der polyedrischen oligomeren Silizium-Sauerstoff-Cluster aufweisenden Verbindung II um die Verbindungsklasse der Sphärosilikate handelt, besitzen sie folgende Formel

[(RₑX_{f}Si₂O_{2,5})ₒ (R_{g}XₕSi₂O₂)ₚ]

mit e, f, g = 0-3; h = 1-4; o+p ≥ 4; e+f = 3 und g+h = 4.

Bevorzugt sind Verbindungen, deren polyedrische oligomere Silizium-Sauerstoff-Clustereinheiten funktionalisierte oligomere Sphärosilikateinheiten sind.

Ebenfalls bevorzugt sind Verbindungen, deren polyedrische oligomere Silizium-Sauerstoff-Clustereinheiten nicht funktionalisierte oligomere Sphärosilikateinheiten sind.

Sowohl die Silasesquioxane als auch die Sphärosilikate sind bei Temperaturen bis zu mehreren hundert Grad Celsius thermisch stabil.

Besonders bevorzugt wird die Verbindungsklasse der Silasesquioxane eingesetzt.

Weitere Informationen über die funktionalisierten polyedrischen oligomeren Silizium-Sauerstoff-Clustereinheiten aufweisenden Verbindungen II, z. B. über ihre Synthese, werden z. B. in der DE 102 20 853.0, DE 102 20 853.0 und DE 103 01 754.2 beschrieben.

Hilfs- und Zusatzstoffe III sind die üblicherweise bei Pulverlacken eingesetzten Verbindungen. Dazu zählen z. B. Verlaufmittel, Lichtstabilisatoren und Entgasungsmittel. Diese können in 0 bis 5 Gew.-% verwendet werden. Außerdem können Pigmente und Füller, z. B. Metalloxide wie Titandioxid, und Metallhydroxide, Sulfate, Sulfide, Carbonate, Silicate, Talkum, Ruß usw. in Gewichtsanteilen von 0 bis 50 % eingesetzt werden.

Zur Herstellung der gebrauchsfertigen Pulverlackzusammensetzung werden die Einsatzstoffe vermischt. Die Homogenisierung der Einsatzstoffe kann in geeigneten Aggregaten, wie z. B. beheizbaren Knetern, vorzugsweise jedoch durch Extrudieren, erfolgen, wobei Temperaturobergrenzen von 140 °C, bevorzugt von 120 bis 130 °C, nicht überschritten werden sollten. Die extrudierte Masse wird nach Abkühlen auf Raumtemperatur und nach geeigneter Zerkleinerung zum sprühfertigen Pulver ohne Zusatz von Kühlmitteln vermahlen. Das Auftragen des sprühfertigen Pulvers auf geeignete Substrate kann nach den bekannten Verfahren, wie z. B. durch elektro- oder tribostatisches Pulversprühen, Wirbelsintern oder elektrostatisches Wirbelsintem erfolgen. Geeignete Substrate sind z. B. unbehandelte oder vorbehandelte metallische Substrate, Holz, Holzwerkstoffe, Kunststoffe, Glas oder Papier.

Die aus den erfindungsgemäßen thermisch härtbaren Pulverlackzusammensetzungen hergestellten Beschichtungen sind flexibel, hart, gut haftend und besitzen eine hydrophobe Oberfläche. Gegenstand der Erfindung sind auch die Beschichtungen der beschriebenen Art.

Die Erfindung wird durch die folgenden Beispiele näher erläutert.

### Beispiele:

**1. Herstellvorschrift des amorphen Polyesterpolyols**
   69 kg Isophthalsäure, 43 kg Neopentylglykol und 2 kg Trimethylolpropan wurden mit 0,2 Massenprozente n-Butylzinntrioctanoat versetzt und in einer mit einer Destillationskolonne versehenen Apparatur unter Stickstoff und Rühren auf 190°C erhitzt. Diese Temperatur wurde im Laufe der Wasserabscheidung langsam auf 230 °C erhöht. Nachdem etwa 98 % der theoretischen Wassermenge abdestilliert worden waren, wurde die heiße Reaktionsmischung aus dem Kolben auf eine Folie gegossen. Sobald die Reaktionsmasse erstarrt und abgekühlt war, wurde sie mechanisch zerkleinert und gemahlen. Die Hydroxylzahl dieses Produktes betrug 29 mg KOH/g, die Säurezahl 1,5 mg KOH/g und die Glasübergangstemperatur 54°C.
**2. Herstellung der amorphen Polyadditionsverbindung mit Uretdiongruppen**
   74,0 g Chlor freies IPDI-Uretdion und 0,05 g DBTL wurden bei 50°C in 37 g Aceton gelöst. Danach wurden 12,4 g Hexandiol-1,6 zugegeben. Nach erfolgter Reaktion wurden 13,6 g 2-Ethylhexanol, gelöst in 6 g Aceton zugetropft. Nach ca. 1 h war die Reaktion beendet. Das Lösemittel wurde am Rotationsverdampfer entfernt. Das Produkt hatte einen NCO-Frei-Gehalt von < 0,1 %. Der NCO-Latent-Gehalt betrug 14,2 %.
**3. Herstellung des Silasesquioxans (Isobutyl)**_{**8**}**Si**_{**8**}**O**_{**12**}
   Zu einer Lösung von 446 g Isobutyltrimethoxysilan (Isobutyl)Si(OMe)₃ in 4300 ml Aceton wurde unter Rühren eine Lösung von 6.4 g KOH in 200 ml H₂O gegeben. Das Reaktionsgemisch wurde daraufhin 3 Tage bei 30 °C gerührt. Der entstandene Niederschlag wurde abfiltriert und bei 70 °C im Vakuum getrocknet. Das Produkt (Isobutyl)₈Si₈O₁₂ wurde in einer Ausbeute von 262 g (96 %) erhalten.
**4. Herstellung der erfindungsgemäßen Pulverlackzusammensetzungen**
   804 g des amorphen Polyesterpolyols aus Beispiel 1 und 130 g der amorphen Polyadditionsverbindung mit Uretdiongruppen aus Beispiel 2 wurden mit 10 g BYK 361 (Verlaufmittel, BYK Chemie), 5 g Benzoin (Entgasungsmittel der Fa. Merck-Schuchard) und 1 g Dibutylzinndilaurat (Katalysator der Fa. Crompton Vinyl Additives GmbH) und 50 g des Silasesquioxans (Isobutyl)₈Si₈O₁₂ aus Beispiel 3 versetzt. Die zerkleinerten Einsatzstoffe wurden in einem Kollergang innig vermischt und anschließend im Extruder bis maximal 130°C homogenisiert. Nach dem Erkalten wurde das Extrudat gebrochen und mit einer Stiftsmühle auf eine Korngröße < 100 µm gemahlen Das so hergestellte Pulver wurde mit einer elektrostatischen Pulverspritzanlage bei 60 KV auf entfettete Normalstahlbleche appliziert. Dann wurde bei 180 °C/30 min eingebrannt.
**5. Herstellung der Pulverlackzusammensetzung ohne Silasesquioxan (Vergleich)**
   Die Pulverlackzusammensetzung wurde analog zur erfindungsgemäßen Pulverlackzusammensetzung aus Beispiel 4 hergestellt. Es wurde nur auf die Zugabe des Silasesquioxans (Isobutyl)₈Si₈O₁₂ aus Beispiel 3 verzichtet.

Die Prüfwerte sind in der Tabelle 1 zusammengefasst:

**Tabelle 1**

| Beispiel | Substrat | HK¹ [sec] | ET² [mm] | Kugelschlag d./i.³ [inch lb] | GS⁴ | Kontaktwinkel⁵ [°] |
|---|---|---|---|---|---|---|
| 4 | Normalstahl | 189 | > 10 | > 80 / > 80 | 0 | 108 |
| 5 (Vergleich) | Normalstahl | 230 | > 10 | > 80/40 | 0 | 94 |

| | | | | | | |
|---|---|---|---|---|---|---|
| 1: Härte nach König (DIN 53 157) | | | | | | |
| 2: Erichsentiefung (DIN 53 156) | | | | | | |
| 3: Schlagtiefung direkt /indirekt (ASTM D 2794-93) | | | | | | |
| 4: Gitterschnitt (DIN 53153, ISO 2409) (Skala 0 (kein Haftungsverlust) bis 5 (totaler Haftungsverlust)) | | | | | | |
| 5: Kontaktwinkel am 60 µl Wassertropfen | | | | | | |

Die aus der erfmdungsgemäßen Pulverlackzusammensetzung hergestellte Beschichtung aus Beispiel 4 weist durch die Zugabe des Silasesquioxans einen hydrophobere Oberfläche auf. Dadurch besitzt die Pulverbeschichtung einen Wasser abweisenden Effekt. Die mechanischen Beschichtungseigenschaften wie Härte, Flexibilität und Haftung bleiben auch nach Zugabe des Silasesquioxans auf dem sehr hohen Niveau. Das nicht erfindungsgemäße Vergleichsbeispiel 5 weist Schwächen in der Hydrophobie der Beschichtung auf.

## Patentansprüche

1. Thermisch härtbare Pulverlackzusammensetzung
enthaltend
I. ein Bindemittel bestehend aus
a) mindestens einer Verbindung mit im statistischen Mittel mehr als einer funktionellen Gruppe
und
b) mindestens einer Verbindung mit im statistischen Mittel mehr als einer zu a) komplementären funktionellen Gruppe
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.

2. Thermisch härtbare Pulverlackzusammensetzung nach Anspruch 1,
**dadurch gekennzeichnet,**
**dass** das Bindemittel I a) eine niedermolekulare, oligomere oder polymere Verbindung ist.

3. Thermisch härtbare Pulverlackzusammensetzung nach mindestens einem der vorherigen Ansprüche,
**dadurch gekennzeichnet,**
**dass** die im Bindemittel I a) vorhandenen reaktiven funktionellen Gruppen gleich oder voneinander verschieden sind.

4. Thermisch härtbare Pulverlackzusammensetzung nach mindestens einem der vorherigen Ansprüche,
**dadurch gekennzeichnet,**
**dass** die im Bindemittel I a) vorhandenen reaktiven funktionellen Gruppen C-C-Doppelbindungen, OH-, SH-, COOH- oder Epoxid-Gruppen sind.

5. Thermisch härtbare Pulverlackzusammensetzung nach mindestens einem der vorherigen Ansprüche,
**dadurch gekennzeichnet,**
**dass** das Bindemittel I a) einen Schmelzbereich zwischen 50 und 140°C besitzt.

6. Thermisch härtbare Pulverlackzusammensetzung nach mindestens einem der vorherigen Ansprüche,
**dadurch gekennzeichnet,**
**dass** das Bindemittel I a) amorph ist.

7. Thermisch härtbare Pulverlackzusammensetzung nach mindestens einem der vorherigen Ansprüche,
**dadurch gekennzeichnet,**
**dass** das Bindemittel I a) (semi)kristallin ist.

8. Thermisch härtbare Pulverlackzusammensetzung nach mindestens einem der vorherigen Ansprüche,
**dadurch gekennzeichnet,**
**dass** das Bindemittel I a) hyperverzweigt ist.

9. Thermisch härtbare Pulverlackzusammensetzung nach mindestens einem der vorherigen Ansprüche,
**dadurch gekennzeichnet,**
**dass** das Bindemittel I a) dendrimetrisch ist.

10. Thermisch härtbare Pulverlackzusammensetzung nach mindestens einem der vorherigen Ansprüche,
**dadurch gekennzeichnet,**
**dass** es sich bei dem Bindemittel I a) um einen Vertreter aus der Klasse der Polyether, Polythioether, Polyacetale, Polyesteramide, Epoxidharze, Aminoplaste, Polyazomethine, Polyurethane, Polysulfonamide, Melaminderivate, Celluloseester, Celluloseether, Polyvinylester, Polyester, Acrylatharze handelt.

11. Thermisch härtbare Pulverlackzusammensetzung nach mindestens einem der vorherigen Ansprüche,
**dadurch gekennzeichnet,**
**dass** es sich bei dem Bindemittel I a) bevorzugt um Polyester, Polyacrylate oder Epoxidharze, die Hydroxyl-, Carboxyl- und/oder Epoxidgruppen tragen, handelt.

12. Thermisch härtbare Pulverlackzusammensetzung nach mindestens einem der vorherigen Ansprüche,
**dadurch gekennzeichnet,**
**dass** das Bindemittel I b) eine niedermolekulare, oligomere oder polymere Verbindung ist.

13. Thermisch härtbare Pulverlackzusammensetzung nach mindestens einem der vorherigen Ansprüche,
**dadurch gekennzeichnet,**
**dass** die im Bindemittel I b) vorhandenen reaktiven funktionellen Gruppen gleich oder voneinander verschieden sind.

14. Thermisch härtbare Pulverlackzusammensetzung nach mindestens einem der vorherigen Ansprüche,
**dadurch gekennzeichnet,**
**dass** das Bindemittel I b) einen Schmelzbereich zwischen 50 und 140°C besitzt.

15. Thermisch härtbare Pulverlackzusammensetzung nach mindestens einem der vorherigen Ansprüche,
**dadurch gekennzeichnet,**
**dass** das Bindemittel I b) amorph ist.

16. Thermisch härtbare Pulverlackzusammensetzung nach mindestens einem der vorherigen Ansprüche,
**dadurch gekennzeichnet,**
**dass** das Bindemittel I b) (semi)kristallin ist.

17. Thermisch härtbare Pulverlackzusammensetzung nach mindestens einem der vorherigen Ansprüche,
**dadurch gekennzeichnet,**
**dass** es sich bei dem Bindemittel I b) um einen Vertreter aus der Klasse der Epoxide, -Hydroxyalkylamide, Carbonsäuren, Carbonsäureanhydride, Isocyanate, Uretdione, Glycolurile, Tris(alkoxycarbonylamino)-1,3,5-Triazine handelt.

18. Thermisch härtbare Pulverlackzusammensetzung nach mindestens einem der vorherigen Ansprüche,
**dadurch gekennzeichnet,**
**dass** es sich bei dem Bindemittel I b) bevorzugt um Triglycidylisocyanurat, aromatische Glycidylester, epoxidierte Fettsäureester, Dicarbonsäuren wie Dodecandisäure, Polycarbonsäuren, Carbonsäureanhydride, blockierte Isocyanat-Addukte, Polyadditionsverbindungen mit Uretdiongruppen, Methoxymethylglycoluril, 2,4,6-Tris-(Methoxycarbonylamino)-1,3,5-triazin, 2,4,6-Tris-(Butoxycarbonylamino)-1,3,5-triazin, 2,4,6-Tris-(Ethylhexoxycarbonylamino)-1,3,5-triazin, 2-Phenylimidazolin oder Salze aus Pyromellitsäure mit 2-Phenylimidazolin handelt.

19. Thermisch härtbare Pulverlackzusammensetzung nach mindestens einem der vorherigen Ansprüche,
**dadurch gekennzeichnet,**
**dass** es sich bei dem Bindemittel I um eine Kombination aus einem Polyester mit Carboxylendgruppen mit Triglycidylisocyanurat, einem Polyester mit Carboxylendgruppen mit einer Mischung aromatischer Glycidylester, Polyester mit Carboxylendgruppen mit einem β-Hydroxyalkyamid, einem Polyester mit Carboxylendgruppen mit einem aliphatischen Oxiran, einem Glycidylmethacrylatharz mit Dodecandisäure, Polyesterpolyol mit einem blockierten Isocyanataddukt, einem Polyesterpolyol mit einer Polyadditionsverbindung mit Uretdiongruppen, einem Polyesterpolyol mit Methoxymethylglycoluril, einem Polyesterpolyol mit 2,4,6-Tris-(Methoxycarbonylamino)-1,3,5-triazin oder 2,4,6-Tris-(Butoxycarbonylamino)-1,3,5-triazin, einem Epoxidharz mit 2,4,6-Tris-(Methoxycarbonylamino)-1,3,5-triazin oder 2,4,6-Tris-(Butoxycarbonylamino)-1,3,5-triazin, einem Epoxidharz mit 2-Phenylimidazolin, einem Epoxidharz mit einem Polyester mit Carboxylendgruppen oder einem Epoxidharz und einem Polyester mit Carboxylendgruppen mit einem organischen Salz handelt.

20. Thermisch härtbare Pulverlackzusammensetzung nach mindestens einem der vorherigen Ansprüche,
**dadurch gekennzeichnet,**
**dass** die polyedrische oligomere Silizium-Sauerstoff-Clustereinheit funktionalisiert ist, wobei X eine funktionelle Gruppe aufweist.

21. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Aminogruppe aufweist.

22. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Isocyanat- oder eine blockierte Isocyanatgruppe aufweist.

23. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Acrylat- oder eine Methacrylatgruppe aufweist.

24. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Alkoxysilyl- oder eine Alkoxysilylalkylgruppe aufweist.

25. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Epoxygruppe aufweist.

26. Thermisch härtbare Pulverlackzusammensetzung nach mindestens einem der vorherigen Ansprüche,
**dadurch gekennzeichnet,**
**dass** mindestens einer der Substituenten vom Typ **X** der polyedrischen oligomeren Silizium-Sauerstoff-Clustereinheit eine Hydroxygruppe aufweist.

27. Thermisch härtbare Pulverlackzusammensetzung nach mindestens einem der vorherigen Ansprüche,
**dadurch gekennzeichnet,**
**dass** mindestens zwei der Substituenten vom Typ **X** der polyedrischen oligomeren Silizium-Sauerstoff-Clustereinheit sind.

28. Thermisch härtbare Pulverlackzusammensetzung nach mindestens einem der vorherigen Ansprüche,
**dadurch gekennzeichnet,**
**dass** mindestens zwei der Substituenten vom Typ **X** der polyedrischen oligomeren Silizium-Sauerstoff-Clustereinheit gleich sind.

29. Thermisch härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit im Wesentlichen auf der Struktur **1** 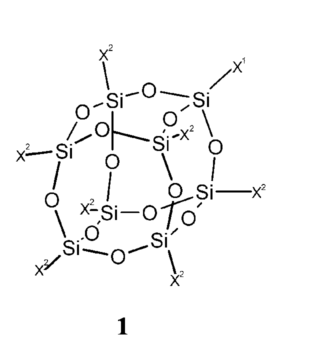 basiert,
mit **X**^{**1**} = Substituent vom Typ **X** oder vom Typ **-O-SiX**_{**3**}, **X**^{**2**} = Substituent vom Typ **X**, vom Typ **-O-SiX**_{**3**}, vom Typ **R**, vom Typ **-O-SiX**_{**2**}**R**, vom Typ -**O-SiXR**_{**2**} oder vom Typ -**O-SiR**_{**3**}.

30. Thermisch härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Silasesquioxaneinheit ist.

31. Thermisch härtbare Pulverlackzusammensetzung nach mindestens einem der vorherigen Ansprüche,
**dadurch gekennzeichnet,**
**dass** die Silasesquioxaneinheit eine funktionalisierte homoleptische Struktur aufweist, wobei alle Substituenten vom Typ **R** gleich sind.

32. Thermisch härtbare Pulverlackzusammensetzung nach mindestens einem der vorherigen Ansprüche,
**dadurch gekennzeichnet,**
**dass** die Silasesquioxaneinheit eine funktionalisierte heteroleptische Struktur aufweist, wobei mindestens zwei der Substituenten vom Typ **R** unterschiedlich sind.

33. Thermisch härtbare Pulverlackzusammensetzung nach mindestens einem der vorherigen Ansprüche,
**dadurch gekennzeichnet,**
**dass** die funktionalisierte oligomere Silasesquioxaneinheit durch eine Umsetzung von Silasesquioxaneinheiten mit freien Hydroxygruppen mit monomeren funktionalisierten Silanen der Struktur **Y**_{**3**}**Si-X**^{**1**}, **Y**_{**2**}**SiX**^{**1**}**X**^{**2**} und **YSiX**^{**1**}**X**^{**2**}**X**^{**3**} erhalten wird, wobei der Substituent Y eine Abgangsgruppe ist, ausgewählt aus Alkoxy-, Carboxy-, Halogen-, Silyloxy- oder Aminogruppe, die Substituenten **X**^{**1**}, **X**^{**2**} und **X**^{**3**} vom Typ **X** sind und gleich oder unterschiedlich sind.

34. Thermisch härtbare Pulverlackzusammensetzung nach mindestens einem der vorherigen Ansprüche,
**dadurch gekennzeichnet,**
**dass** die funktionalisierte oligomere Silasesquioxaneinheit im Wesentlichen auf der Struktur **2**, **3** oder **4** basiert, 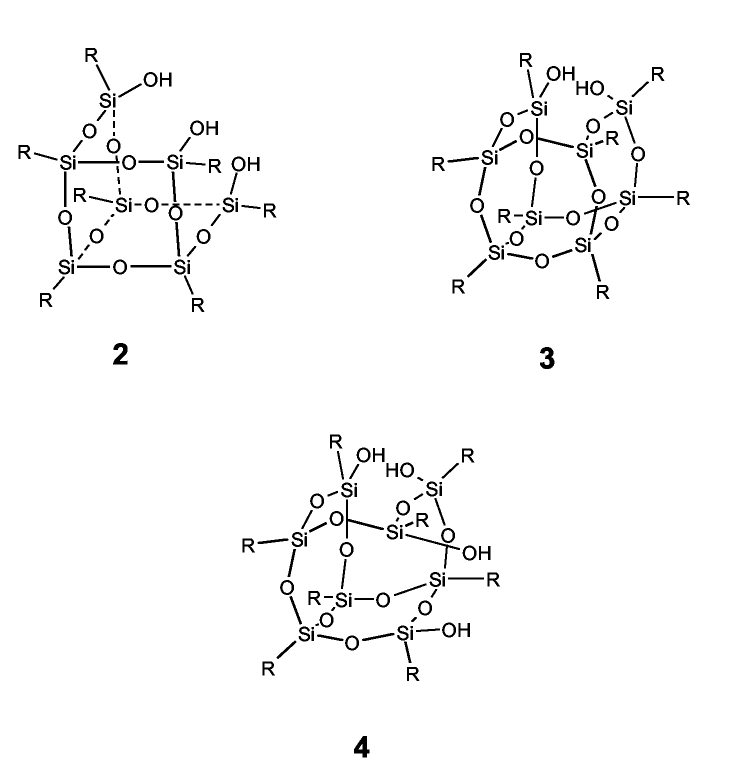 wobei die Silasesquioxaneinheit über mindestens eine Hydroxylgruppe funktionalisiert ist.

35. Thermisch härtbare Pulverlackzusammensetzung nach mindestens einem der vorherigen Ansprüche,
**dadurch gekennzeichnet,**
**dass** die funktionalisierte oligomere Silasesquioxaneinheit im Wesentlichen auf der Struktur 5 basiert, 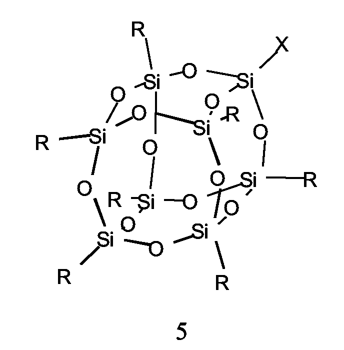 mit **R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten enthalten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind.

36. Thermisch härtbare Pulverlackzusammensetzung nach mindestens einem der vorherigen Ansprüche,
**dadurch gekennzeichnet,**
**dass** die polyedrische oligomere Silizium-Sauerstoff-Clustereinheit eine nicht funktionalisierte oligomere Silasesquioxaneinheit ist.

37. Thermisch härtbare Pulverlackzusammensetzung nach mindestens einem der vorherigen Ansprüche,
**dadurch gekennzeichnet,**
**dass** die funktionalisierte polyedrische oligomere Silizium-Sauerstoff-Clustereinheit eine funktionalisierte oligomere Sphärosilikateinheit ist.

38. Thermisch härtbare Pulverlackzusammensetzung nach mindestens einem der vorherigen Ansprüche,
**dadurch gekennzeichnet,**
**dass** die polyedrische oligomere Silizium-Sauerstoff-Clustereinheit eine nicht funktionalisierte oligomere Sphärosilikateinheit ist.

39. Thermisch härtbare Pulverlackzusammensetzung nach mindestens einem der vorherigen Ansprüche,
**dadurch gekennzeichnet,**
**dass** als Hilfs- und Zusatzstoffe III UV-Initiatoren, Verlaufmittel, Lichtstabilisatoren, Entgasungsmittel, Pigmente oder Füllstoffe enthalten sind.

40. Verwendung einer thermisch härtbaren Pulverlackzusammensetzung enthaltend
I. ein Bindemittel bestehend aus
a) mindestens einer Verbindung mit im statistischen Mittel mehr als einer funktionellen Gruppe
und
b) mindestens einer Verbindung mit im statistischen Mittel mehr als einer zu a) komplementären funktionellen Gruppe
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.
zur Herstellung von Thermisch härtbaren Pulverlacken.

41. Verfahren zur Herstellung einer thermisch härtbaren Pulverlackzusammensetzung enthaltend
I. ein Bindemittel bestehend aus
a) mindestens einer Verbindung mit im statistischen Mittel mehr als einer funktionellen Gruppe
und
b) mindestens einer Verbindung mit im statistischen Mittel mehr als einer zu a) komplementären funktionellen Gruppe
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e,f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe,
bei Einhaltung einer Temperaturobergrenze von 140 °C, in beheizbaren Knetern, insbesondere Extrudern.

42. Verfahren zur Herstellung von Beschichtungen durch Verwendung einer thermisch härtbaren Pulverlackzusammensetzung
enthaltend
I. ein Bindemittel bestehend aus
a) mindestens einer Verbindung mit im statistischen Mittel mehr als einer funktionellen Gruppe
und
b) mindestens einer Verbindung mit im statistischen Mittel mehr als einer zu a) komplementären funktionellen Gruppe
und
II. mindestens einer Verbindung, die polyedrische oligomere Silizium-Sauerstoff-Clustereinheiten aufweist, gemäß der Formel
[(RₐX_{b}SiO_{1,5})ₘ (R_{c}X_{d}SiO)ₙ (RₑX_{f}Si₂O_{2,5})ₒ (R_{g}XₕSi₂O₂)ₚ]
mit a, b, c = 0-1; d = 1-2; e, f, g = 0-3; h = 1-4; m+n+o+p ≥ 4; a+b = 1; c+d = 2; e+f = 3 und g+h = 4;
**R** = Wasserstoffatom, Alkyl-, Cycloalkyl-, Alkenyl-, Cycloalkenyl-, Alkinyl-, Cycloalkinyl-, Aryl-, Heteroarylgruppe oder Polymereinheit, die jeweils substituiert oder unsubstituiert sind oder weitere funktionalisierte polyedrische oligomere Silizium-Sauerstoff-Clustereinheiten, die über eine Polymereinheit oder eine Brückeneinheit angebunden sind,
**X** = Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, Fluoralkyl-, Isocyanat-, blockierte Isocyanat-, Acrylat-, Methacrylat-, Nitril-, Amino-, Phosphingruppe oder mindestens eine solche Gruppe vom Typ **X** aufweisenden Substituenten vom Typ **R**,
wobei die Substituenten vom Typ **R** gleich oder unterschiedlich sind und die Substituenten vom Typ **X** gleich oder unterschiedlich sind
und
III. Hilfs- und Zusatzstoffe.

43. Beschichtungen, hergestellt aus den thermisch härtbaren Pulverlackzusammensetzungen nach mindestens einem der Ansprüche 1 bis 39.
